# EUROPÄISCHE PATENTANMELDUNG

(11) **EP 1 584 523 A2**
(43) Veröffentlichungstag der Anmeldung: **12.10.2005**
(21) Anmeldenummer: 05006175.3
(22) Anmeldetag: 22.03.2005
(51) Int. Cl.: B60R 22/24

(54) **Sicherheitsgurtsystem für Fahrzeuge**

(30) Priorität: 06.04.2004 DE 102004016802
(71) Anmelder: DaimlerChrysler AG, 70567 Stuttgart (DE)
(72) Erfinder: Röder, Thomas, 71229 Leonberg (DE); Schmidt, Hartmut, 75173 Pforzheim (DE)

(57) **Zusammenfassung**

Es wird ein Sicherheitsgurtsystem (3) für Fahrzeuge, umfassend ein Gurtband (5), eine Gurtband-Aufrolleinrichtung (7), sowie einen Gurtband-Umlenker (9) vorgeschlagen. Das Sicherheitsgurtsystem (3) zeichnet sich durch in dem Freiraum zwischen der Gurtband-Aufrollrichtung (7) und dem Gurtband-Umlenker (9) angeordnete Gurtbandbreitenreduzierungsmittel (11) aus.

## Beschreibung

Die Erfindung betrifft ein Sicherheitsgurtsystem für Fahrzeuge, umfassend ein Gurtband, eine Gurtband-Aufrolleinrichtung sowie einen Gurtband-Umlenker.

Ein Sicherheitsgurtsystem der hier angesprochenen Art ist bekannt (DE 36 24 155 C2). Es umfasst ein Gurtband, eine Gurtband-Aufrollautomatik und einen Umlenkbeschlag mit Gurtband-Führungsschlitz, wobei dieser so ausgebildet ist, dass beim Einzug des Gurtbandes ein Falten desselben eintritt und dieses mittels der Gurtband-Aufrollautomatik im gefalteten Zustand aufgerollt wird. Die sich quer zur Gurtband-Zugrichtung erstreckende Gurtband-Durchtrittslänge des Führungsschlitzes ist wesentlich kleiner als die Gurtbandbreite, so dass durch das Falten des Gurtbandes dessen Breite reduziert wird. Der für das gefaltete Gurtband erforderliche Platzbedarf in dem Bereich zwischen dem Umlenkbeschlag und der Gurtband-Aufrollautomatik ist entsprechend reduziert, so dass der eingesparte Bauraum zur Unterbringung von anderen Bauteilen genutzt oder alternativ eine Gurtbandabdeckung in diesem Bereich schmäler ausgeführt werden kann. Nachteilig bei dem bekannten Sicherheitsgurtsystem ist, dass zum Aufrollen des gefalteten Gurtbandes eine spezielle Gurtband-Aufrolleinrichtung eingesetzt werden muss. Darüber hinaus unterliegt das im gefalteten Zustand aufgerollte Gurtband einer hohen Beanspruchung und ist daher verschleißbehaftet.

Es ist Aufgabe der Erfindung, eine Alternative zu dem Sicherheitsgurtsystem der eingangs genannten Art zu schaffen.

Zur Lösung der Aufgabe wird ein Sicherheitsgurtsystem mit den Merkmalen des Anspruchs 1 vorgeschlagen, das sich dadurch auszeichnet, dass in dem Freiraum zwischen der Gurtband-Aufrolleinrichtung und dem Gurtband-Umlenker Gurtbandbreitenreduzierungsmittel angeordnet sind. Dadurch wird erreicht, dass lediglich im Bereich der Mittelsäule (B-Säule) des Fahrzeugs, in deren Bereich das Sicherheitsgurtsystem im eingebauten Zustand angeordnet ist, eine Gurtbandbreitenreduzierung realisiert ist, während das Gurtband im Bereich des Gurtband-Umlenkers und der Gurtband-Aufrolleinrichtung in voller Breite, das heißt weder aufgerollt noch gefaltet oder in sonstiger Weise verformt geführt ist. Auf Grund dieser Ausgestaltung ist eine schonende Führung, Umlenkung und Aufwicklung des Gurtbandes realisierbar. Ferner ist der Platzbedarf für das Gurtband im Bereich der Gurtbandbreitenreduzierungsmittel verringert, so dass hier eine wesentlich schmalere Abdeckung für das Gurtband vorgesehen werden kann beziehungsweise Bauraum zur Unterbringung von anderen Bauteilen frei ist.

In besonders bevorzugter Ausführungsform des Sicherheitsgurtssystem ist vorgesehen, dass die Gurtbandbreitenreduzierungsmittel eine falten- und knickfreie Verformung des Gurtbandes bewirken. Dies ist dadurch realisierbar, dass die Längsränder des Gurtbandes in geeigneter Weise einander angenähert werden, was zu einem Durchbiegen des flexiblen Gurtbandes in Richtung seiner Längserstreckung führt. Dabei kann ein scharfkantiges Knicken oder Falten in einfacher Weise vermieden werden. Das Gurtband wird daher besonders schonend reversibel verformt.

Weiterhin wird ein Ausführungsbeispiel des Sicherheitsgurtsystems bevorzugt, das sich dadurch auszeichnet, dass die Gurtbandbreitenreduzierungsmittel nur über eine bestimmte Laufstrecke des Gurtbandes eine Reduzierung der lichten Gurtbrandbreite bewirken. Diese ist vorzugsweise kürzer als der Abstand zwischen der Gurtband- Aufrolleinrichtung und dem Gurtband-Umlenker, so dass das Gurtband in voller Breite mittels der Gurtband-Aufrolleinrichtung aufgerollt und mittels des Gurtband-Umlenkers umgelenkt wird. Auf Grund dieser Ausgestaltung kann auf den Einsatz spezieller Gurtband-Aufrolleinrichtungen und Gurtband-Umlenker, wie sie bei dem aus der DE 36 24 155 C2 hervorgehenden Sicherheitsgurtsystem erforderlich sind, verzichtet werden.

Besonders bevorzugt wird ein Ausführungsbeispiel des Sicherheitsgurtsystems, bei dem die Gurtbandbreitenreduzierungsmittel ein rinnenförmiges Verformungselement umfassen, durch das das Gurtband in Längsrichtung hindurch geführt ist, und dass die wirksame Breite des Verformungselement kleiner als die lichte Breite des Gurtbandes ist. Das Verformungselement kann als Linearführung ausgebildet sein, das heißt es findet keine Umlenkung und somit räumliche Änderungen der Laufrichtung des Gurtbandes statt. Alternativ kann vorgesehen sein, dass das rinnenförmige Verformungselement wenigstens eine Krümmung aufweist, so dass beim Durchlaufen des Verformungselements eine Änderung der Laufrichtung des Gurtbandes erreicht wird.

An Stelle des rinnenförmigen Verformungselements kann ohne weiteres auch ein rohrförmiges Verformungselement vorgesehen sein, wobei der Innendurchmesser des rohrförmigen Verformungselements entsprechend der gewünschten Breitenreduzierung des Gurtbandes kleiner als die lichte Breite des unverformten Gurtbandes ist. Zur Ausbildung einer Linearführung ist das rohrförmige Verformungselement gerade ausgebildet. Sofern eine Änderung der Laufrichtung des Gurtbandes im Bereich des rohrförmigen Verformungselements gewünscht ist, kann dieses entsprechend gekrümmt ausgebildet sein.

Weitere vorteilhafte Ausführungsformen des Sicherheitsgurtsystems ergeben sich aus Kombinationen der aus den Unteransprüchen, der Figurenbeschreibung und der Zeichnung hervorgehenden Merkmale.

Die Erfindung wird im Folgenden anhand der Zeichnung näher erläutert. Es zeigen:
- Fig. 1: in perspektivischer Darstellung eine Ansicht einer Mittelssäule einer Fahrzeugaufbaustruktur mit daran angebrachtem Sicherheitsgurtsystem;
- Fig. 2: einen Ausschnitt des Sicherheitsgurtsystems gemäß Figur 1 in vergrößerter und perspektivischer Darstellung, nämlich ein Gurtbandbreitenreduzierungsmittel;
- Fig. 3: einen Querschnitt durch das Gurtbandbreitenreduzierungsmittel gemäß Figur 2 und
- Fig. 4: einen Ausschnitt "Z" des Gurtbandreduzierungsmittels gemäß Figur 3 in vergrößerter Darstellung.

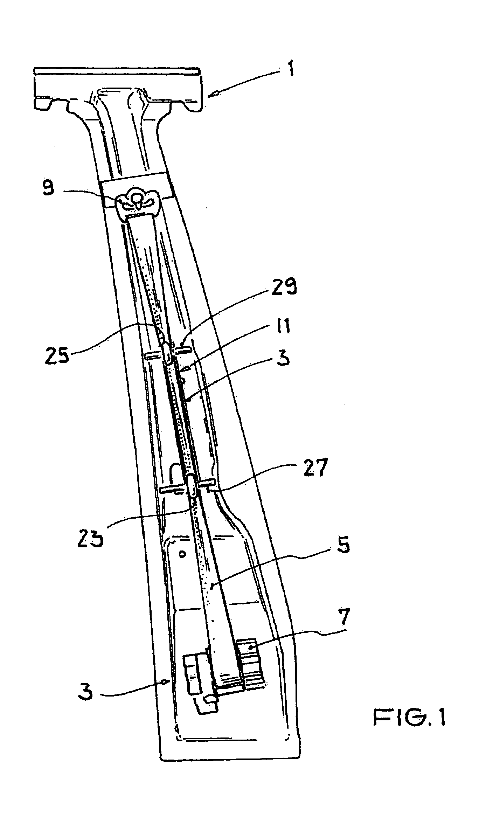

Figur 1 zeigt einen Ausschnitt eines Kraftfahrzeugs, nämlich eine Mittelsäule 1 (B-Säule) und ein Ausführungsbeispiel eines Sicherheitsgurtsystems 3, welches ein Gurtband 5, eine Gurtband-Aufrolleinrichtung 7 sowie einen Gurtband-Umlenker 9 aufweist. Die Gurtband-Aufrolleinrichtung 7 ist hier nahe des Fahrzeugbodens innerhalb der Mittelsäule 1 befestigt, während der Gurtband-Umlenker 9 oben an der Mittelsäule 1 einer Fahrgastzelle des Kraftfahrzeugs befestigt ist. Die Gurtband-Aufrolleinrichtung 7 und der Gurtband-Umlenker 9 sind so ausgebildet, dass das Gurtband 5 mit seiner vollen Breite aufgewickelt beziehungsweise umgelenkt wird.

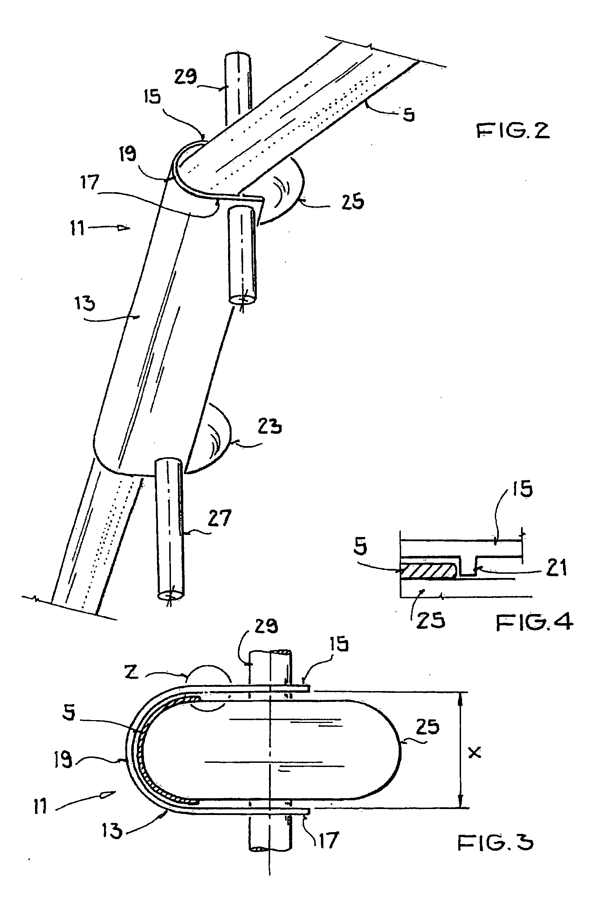

Das Sicherheitsgurtsystem 3 weist ferner Gurtbandbreitenreduzierungsmittel 11 auf, die in dem Freiraum zwischen dem Gurtband-Umlenker 9 und der Gurtband-Aufrolleinrichtung 7, innerhalb dessen das Gurtband 5 ansonsten frei geführt ist, angeordnet und an der Mittelsäule 1 befestigt sind. Der Aufbau und die Funktion der Gurtbandbreitenreduzierungsmittel 11 wird im Folgenden anhand der Figuren 2 bis 4 näher erläutert.

Figur 2 zeigt eine perspektivische Darstellung der Gurtbandbreitenreduzierungsmittel 11, die bei diesem Ausführungsbeispiel ein rinnenförmiges Verformungselement 13 umfassen, das einen U-förmigen Querschnitt aufweist. Das Verformungselement 13 ist vorzugsweise einstückig ausgebildet und weist Seitenwände 15 und 17 auf, die über einen gekrümmten, hier halbkreisförmigen Wandabschnitt 19 miteinander verbunden sind. Der Abstand X zwischen den beiden parallel zueinander verlaufenden Seitenwänden 15, 17 ist kleiner als die lichte Breite des unverformten Gurtbandes 5, was dazu führt, dass das durch das Verformungselement 13 hindurch geführte Gurtband 5 in Zugrichtung des Gurtbandes 5 unter Annäherung seiner Längsränder quasi eingeschlagen wird, so dass seine lichte Breite im Bereich des Verformungselements 13 dem Abstand X zwischen den Seitenwänden 15 und 17 entspricht.

Wie aus Figur 1 ersichtlich, ist die Gesamtlänge des Verformungselements 13 bei diesem Ausführungsbeispiel deutlich kürzer als die Länge des Freiraums zwischen dem Gurtband-Umlenker 9 und der Gurtband-Aufrolleinrichtung 7. Ferner ist zu erkennen, dass das Gurtband 5 -in Zugrichtung betrachtetbereits ein Stück weit vor dem Verformungselement 13, durch das es hindurchgeführt ist, beginnt sich zu verjüngen. In dem Bereich zwischen dem Auslauf des Verformungselements 13 und dem Gurtband-Umlenker 9 vergrößert sich wieder die Breite des Gurtbandes 5 bis hin auf seine volle Breite.

Um zu verhindern, dass das Gurtband 5 aus dem einseitig offenen, rinnenförmigen Verformungselement 13 herausläuft/springt, ist auf der Innenseite der Seitenwände 15 und 17 jeweils ein Anschlag vorgesehen, von denen in der Darstellung gemäß Figur 4 lediglich der an der Seitenwand 15 vorgesehene Anschlag 21 erkennbar ist.

Die Gurtbandbreitenreduzierungsmittel 11 weisen ferner hiervon Rollen 23 und 25 gebildete Führungselemente auf, die in Querrichtung zur Laufrichtung des Gurtbandes 5 in das einseitig offene Verformungselement 13 eingreifen und mittels Achsen 27 beziehungsweise 29 drehbar am Verformungselement 13 gelagert sind. Die Rollen 23, 25 sind identisch ausgebildet, so dass im Folgenden lediglich die Rolle 25 anhand der Figur 3 näher erläutert wird. Die Rolle 25 ist in Größe und Form so an das Verformungselement 13 angepasst, dass ein schmaler Spalt zwischen dieser und den Seitenwänden 15 und 17 sowie dem gekrümmten Abschnitt 19 des Verformungselements 13 gebildet ist, in dem das an seinen Längsrändern mittels des Verformungselements 13 eingeschlagene Gurtband 5 geführt ist. Mittels der Rollen 23, 25 ist eine reibungsarme Zwangsführung des Gurtbandes 5 realisiert. Es können -sofern erforderlich beziehungsweise ausreichend- auch mehr als zwei Rollen oder auch nur eine einzelne Rolle vorgesehen sein.

Wie aus Figur 2 ersichtlich, wird das Gurtband 5 mittels der Rolle 25, die sich in Zugrichtung des Gurtbandes 5 gesehen im Auslaufbereich des Verformungselements 13 befindet, um einen bestimmten Winkelbereich umgelenkt, so dass es seine Laufrichtung gegenüber dem Einlaufbereich des Verformungselements 13 ändert.

Es bleibt festzuhalten, dass die Funktion des rinnenförmigen Verformungselements 13 darin besteht, die Breite des Gurtbandes 5 über eine bestimmte Laufstrecke desselben in schonender Weise zu verringern, was -wie vorstehend beschrieben- durch ein quasi Einschlagen der Längsränder des Gurtbandes 5 erfolgt. Die Aufgabe der Rollen 23 und 25 besteht darin, eine Änderung der Laufrichtung des Gurtbandes 5 zu bewirken beziehungsweise zu ermöglichen. Sofern eine Änderung des Verlaufs des Gurtbandes 5 nicht erforderlich ist, also wenn die Laufrichtung des Gurtbandes 5 im Bereich des Verformungselements 13 parallel zu dessen Längserstreckung ist, kann gegebenenfalls auf die Rollen 23, 25 verzichtet werden.

## Patentansprüche

1. Sicherheitsgurtsystem (3) für Fahrzeuge, umfassend ein Gurtband (5), eine Gurtband-Aufrolleinrichtung (7) sowie einen Gurtband-Umlenker (9),
**gekennzeichnet durch**
in dem Freiraum zwischen der Gurtband-Aufrolleinrichtung (7) und dem Gurtband-Umlenker (9) angeordnete Gurtbandbreitenreduzierungsmittel (11).

2. Sicherheitsgurtsystem nach Anspruch 1,
**dadurch gekennzeichnet,**
**dass** die Gurtbandbreitenreduzierungsmittel (11) eine falten- und knickfreie Verformung des Gurtbandes (5) bewirken.

3. Sicherheitsgurtsystem nach Anspruch 1 oder 2,
**dadurch gekennzeichnet,**
**dass** die Gurtbandbreitenreduzierungsmittel (11) nur über eine bestimmte Laufstrecke des Gurtbandes (5) eine Reduzierung der lichten Gurtbandbreite bewirken.

4. Sicherheitsgurtsystem nach Anspruch 3,
**dadurch gekennzeichnet,**
**dass** die Laufstrecke kürzer als der Abstand zwischen der Gurtband-Aufrolleinrichtung (7) und dem Gurtband-Umlenker (9) ist.

5. Sicherheitsgurtsystem nach einem der Ansprüche 1 bis 4,
**dadurch gekennzeichnet,**
**dass** die Gurtbandbreitenreduzierungsmittel (11) ein rinnenförmiges Verformungselement (13) umfassen, durch das das Gurtband (5) hindurch geführt ist, und dass die wirksame Breite (X) des Verformungselements (13) kleiner als die lichte Breite des Gurtbandes (5) ist.

6. Sicherheitsgurtsystem nach Anspruch 5,
**dadurch gekennzeichnet,**
**dass** das vorzugsweise einstückig ausgebildete Verformungselement (13) in orthogonaler Richtung zur Laufrichtung des Gurtbands (5) verlaufende, über einen gekrümmten Wandabschnitt (19) miteinander verbundene Seitenwände (15,17) zur seitlichen Zwangsführung des Gurtbandes (5) aufweist.

7. Sicherheitsgurtsystem nach Anspruch 5 oder 6,
**dadurch gekennzeichnet,**
**dass** die Gurtbandbreitenreduzierungsmittel (11) mindestens ein, in Querrichtung zur Laufrichtung des Gurtbandes (5) in das einseitig offene Verformungselement (13) eingreifendes Führungselement (23,25) aufweisen.

8. Sicherheitsgurtsystem nach Anspruch 7,
**dadurch gekennzeichnet,**
**dass** das Führungselement (23,25) von einer drehbar gelagerten Rolle (23,25) gebildet ist.

9. Sicherheitsgurtsystem nach Anspruch 5,
**dadurch gekennzeichnet,**
**dass** an Stelle des rinnenförmigen Verformungselements (13) ein rohrförmiges Verformungselement (13) vorgesehen ist.
